Europäisches Patentamt

(19) European Patent Office

Office européen des brevets

(11) Numéro de publication : **0 010 503**
**B1**

(12) # FASCICULE DE BREVET EUROPÉEN

(45) Date de publication du fascicule du brevet :
**15.12.82**

(51) Int. Cl.³ : **F 16 M 11/34**

(21) Numéro de dépôt : **79400768.2**

(22) Date de dépôt : **19.10.79**

(54) Trépied à surface de sustentation réglable pour le support d'objets divers.

(30) Priorité : **24.10.78 CH 10976/78**

(43) Date de publication de la demande :
**30.04.80 (Bulletin 80/09)**

(45) Mention de la délivrance du brevet :
**15.12.82 Bulletin 82/50**

(84) Etats contractants désignés :
**AT BE IT LU NL SE**

(56) Documents cités :
**DE A 1 952 505**
**DE C 376 970**
**DE C 1 169 146**

(73) Titulaire : **GEFITEC S.A.**
**Avenue de la Gare, 5 Case postale 452**
**CH-1001 Lausanne 1 (CH)**

(72) Inventeur : **Posso, Patrick**
**10, avenue Jurigoz, 10**
**CH-1006 Lausanne (CH)**

(74) Mandataire : **Caunet, Jean et al**
**Cabinet BEAU DE LOMENIE 55, rue d'Amsterdam**
**F-75008 Paris (FR)**

Jouve, 18, rue St-Denis, 75001 Paris, France

## Trépied à surface de sustentation réglable pour le support d'objets divers

La présente invention concerne un trépied à surface de sustentation réglable pour le support d'objets divers.

Le brevet allemand 1.169.146 décrit un trépied de ce type qui comprend, d'une part, un support central muni d'axes d'articulation pour des jambes télescopiques susceptibles de pivoter dans des plans radiaux et, d'autre part, une bague de sélection montée tournante autour de l'axe sensiblement vertical du support, immobilisée en translation axiale et limitée en amplitude de rotation pour pouvoir occuper au moins deux positions angulaires ; cette bague présente, en regard de chaque jambe, au moins deux évidements de niveaux différents, ménagés en creux dans sa face supérieure et décalés angulairement en correspondance avec les positions sélectives de ladite bague, chaque évidement constituant un arrêtoir pour un bec qui fait saillie latéralement sur l'extrémité supérieure de la jambe considérée.

Le brevet français 441.362 concerne également un trépied à surface de sustentation réglable. Le support central de ce trépied, sous lequel les jambes télescopiques sont articulées, est conformé en moyeu fileté qui coopère avec une bague taraudée dont la face inférieure constitue un élément d'appui pour des ergots faisant saillie latéralement sur l'extrémité supérieure de ces jambes. En faisant tourner la bague, on règle le niveau de sa surface inférieure d'appui et par conséquent l'inclinaison des jambes.

Le brevet US 2.550.415 se rapporte aussi à un trépied sous le support central duquel sont articulées trois jambes télescopiques. Ce support présente également en saillie, sous sa face inférieure, des pattes situées en regard de l'extrémité libre des jambes pour former des butées qui déterminent une seule inclinaison desdites jambes.

Il est important de remarquer que dans tous ces trépieds connus, l'appui de chaque jambe est réalisé par l'intermédiaire d'un élément saillant travaillant à la flexion. Dès lors, le dispositif cinématique est relativement fragile et risque de se rompre ou de se déformer, ce qui nuit bien évidemment à la stabilité du trépied.

La présente invention a pour but de remédier à cet inconvénient majeur et propose une combinaison de moyens telle que les efforts sont toujours supportés suivant l'axe de chaque jambe, de sorte que les jambes travaillent en compression axiale et la bague tournante en compression dans un plan radial.

Ce résultat est particulièrement intéressant puisque toutes les pièces étant sollicitées en compression, peuvent être fabriquées en matière plastique. De nombreux avantages en découlent : production en grande série, faible prix de revient, légèreté, fiabilité en fonctionnement, entretien négligeable, etc.

Conformément à l'invention, chacune des jambes s'étend au-delà de son axe d'articulation vers le haut, afin de constituer, par son extrémité qui est perpendiculaire à l'axe de la jambe considérée, la butée correspondante et la surface inférieure de la bague de sélection présente, en relation avec cette butée pour former des arrêtoirs conjugués, au moins deux rampes inclinées s'étendant parallèlement et à la même distance de l'axe d'articulation de la jambe considérée, mais convergeant vers l'axe géométrique du support suivant des angles différents, ces rampes étant décalées angulairement suivant la périphérie circonférentielle de la bague en correspondance avec les deux positions de cette bague.

Dans une forme de réalisation, le support comprend un fourreau tubulaire solidaire d'une collerette dont la partie inférieure présente en saillie trois oreilles pour l'articulation des jambes et dont la partie supérieure forme, en coopération avec l'extrémité saillante du fourreau, le siège inférieur, la portée cylindrique et les trois plots précités, cependant que le siège supérieur est constitué par un couvercle centré sur ladite extrémité saillante du fourreau et pourvu de bossages proéminents appliqués et vissés sur lesdits plots.

Divers autres caractéristiques et avantages de l'invention ressortent d'ailleurs de la description détaillée qui suit.

La forme de réalisation préférentielle précitée est représentée, à titre d'exemple non limitatif, sur le dessin annexé.

Sur ce dessin :

la figure 1 est une élévation schématique visualisant deux positions particulières du pied, conforme à l'invention, dont les jambes sont rabattues dans un même plan afin de mieux faire comprendre le résultat obtenu,

la figure 2 est une élévation coupe brisée prise suivant la ligne II-II de la figure 3 et montrant la tête du pied photographique en position de petit écartement,

la figure 3 est un plan vu en coupe suivant la ligne III-III de la figure 2, et

les figures 4 et 5 sont des vues analogues aux figures 2 et 3 respectivement, illustrant la position de grand écartement.

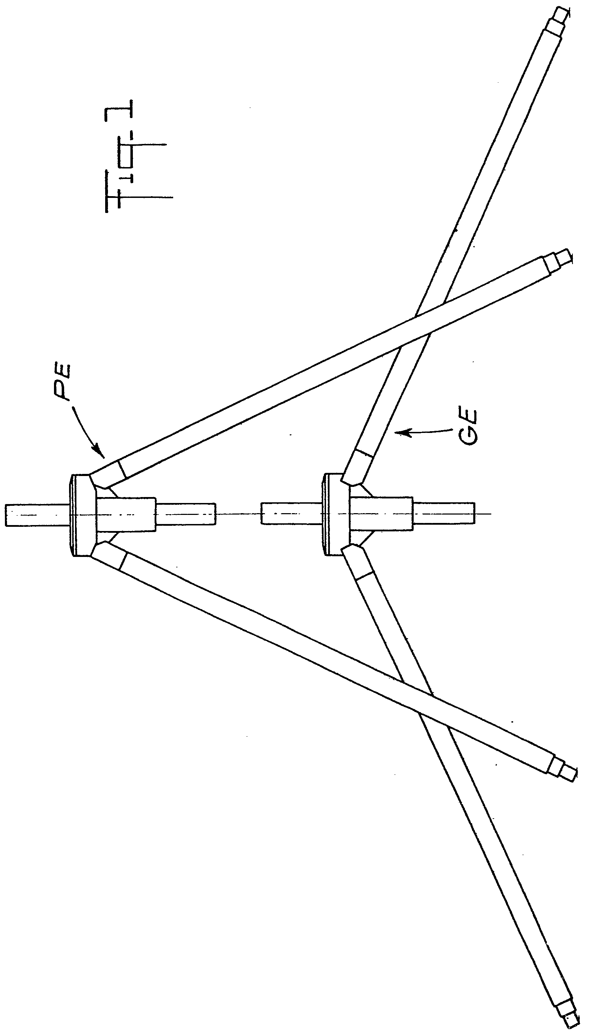

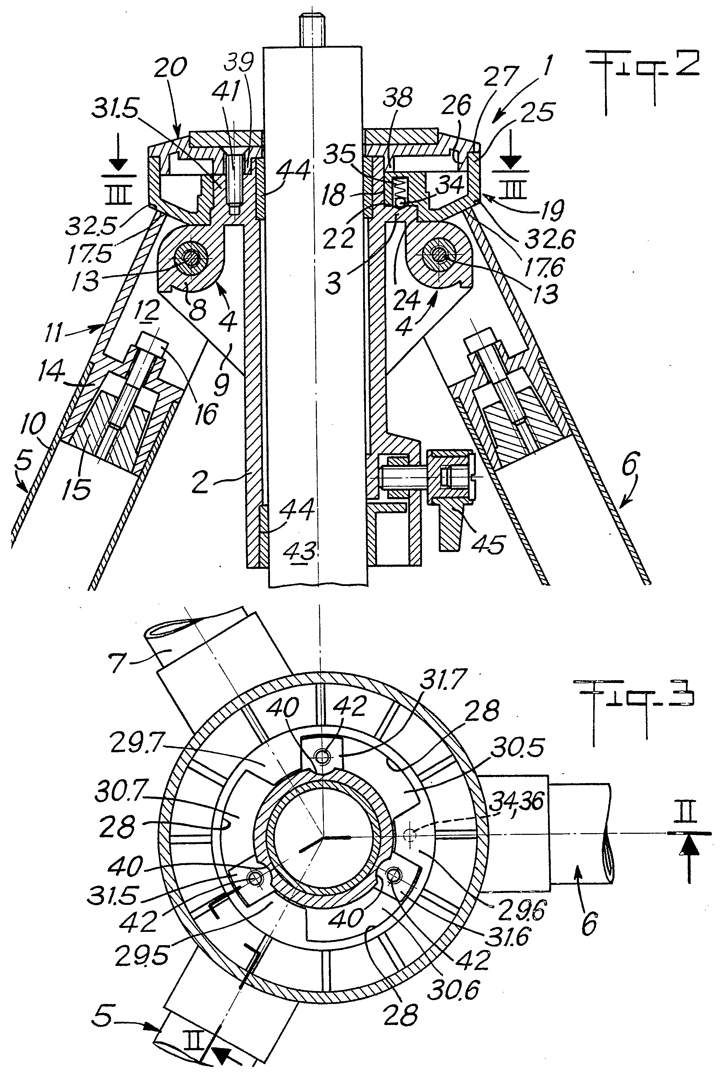

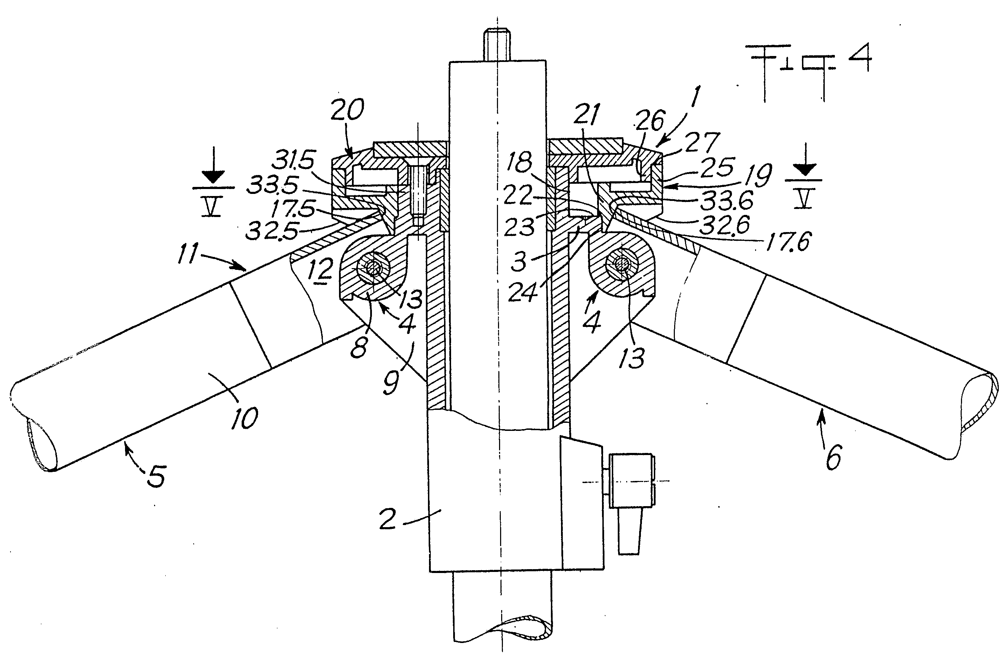

Ainsi que cela ressort clairement des figures 2 et 3, le pied photographique comprend un support central 1 constitué par un fourreau tubulaire 2 solidaire d'une collerette 3 présentant en saillie, à sa partie inférieure, trois oreilles 4 pour l'articulation de trois jambes télescopiques 5 à 7 susceptibles de pivoter dans des plans radiaux équiangles.

Dans l'exemple représenté, chaque oreille 4 comporte un manchon 8 relié au fourreau 2 par deux nervures latérales 9. L'élément tubulaire supérieur 10 de chaque jambe télescopique est équipé d'un embout 11 dont l'extrémité libre est un profilé en U. Les ailes 12 de ce profilé sont disposées de part et d'autre des nervures 9 de l'oreille correspondante, nervures qui assurent donc le maintien latéral parfait de la jambe considérée. Ces ailes 12 et le manchon 8 sont traversés par un axe d'articulation 13 autour duquel ladite jambe peut pivoter. Cet embout 11 est solidaire d'une jupe fendue 14 normalement emboîtée dans l'embouchure de l'élément supérieur 10 de cette jambe et coopérant avec un mandrin conique 15 qui provoque son expansion lors du serrage d'une vis 16 et ainsi la solidarisation dudit embout avec ledit élément.

Il est important de remarquer que le bord terminal franc de chaque embout est perpendiculaire à l'axe géométrique de la jambe à laquelle il appartient et que ce bord constitue une butée déterminant, ainsi que cela est exposé dans ce qui suit, l'inclinaison de ladite jambe. Les trois butées des jambes 5, 6 et 7 sont alors désignées par les repères 17.5, 17.6 et 17.7.

L'extrémité haute du fourreau faisant saillie de la collerette 3 constitue une portée cylindrique 18 autour de laquelle est montée tournante une bague de sélection 19 et est centré un couvercle 20.

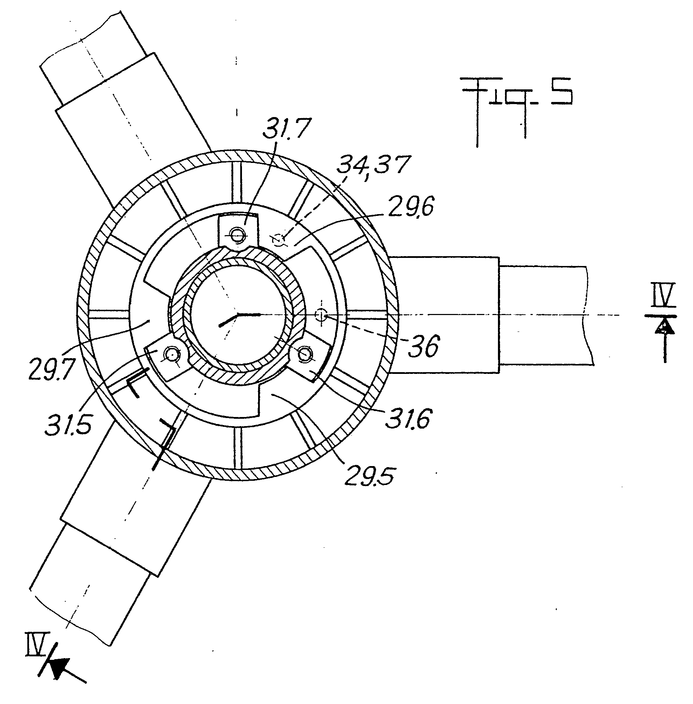

La bague 19 comporte un moyeu central 21 qui délimite (figure 4) un épaulement 22 reposant sur un siège inférieur 23 formé par la face apparente de la collerette 3 et, d'autre part, un alésage 24 centré autour de ladite collerette. Le moyeu est solidaire d'un rebord tubulaire périphérique 25 guidé en rotation autour d'une jupe cylindrique 26 du couvercle et appliqué contre un siège supérieur 27 formé par une partie marginale de ce couvercle.

Comme le montrent les figures 2 et 3, la bague de sélection 19 présente en saillie, dans un alésage cylindrique 28 concentrique à la portée fixe 18, trois butées 29.5, 29.6 et 29.7 réparties de façon équiangle, s'étendant jusqu'à cette portée mais sans y toucher et délimitant entre elles trois évidements en forme de secteurs 30.5, 30.6 et 30.7. D'une manière réciproque, l'extrémité haute du fourreau 2 présente en saillie, sur la portée 18 et dans les évidements précités, trois plots 31.5, 31.6 et 31.7 répartis de façon équiangle, s'étendant jusqu'à l'alésage 28 mais sans y toucher et coopérant sélectivement par leurs faces latérales avec les butées.

Ainsi, lorsque la butée 29.5 est en contact avec le plot 31.5 (et les butées 29.6, 29.7 avec les plots 31.6, 31.7), les jambes 5 à 7 occupent la position de petit écartement (figures 2 et 3) position qui est désignée par le repère PE sur la figure 1. A cet effet, la bague de sélection 19 comporte trois arrêtoirs 32.5, 32.6 et 32.7, répartis de façon équiangle à la partie inférieure de cette bague et situés, dans la position PE précitée, en regard des butées extrêmes 17.5, 17.6 et 17.7 des jambes 5, 6 et 7.

D'une manière analogue, lorsque la butée 29.5 est en contact avec le plot 31.6 (et les butées 29.6, 29.7 avec les plots 31.7, 31.5), les jambes 5 à 7 occupent la position de grand écartement (figures 4 et 5), position qui est désignée par le repère GE sur la figure 1. A cet effet, la bague de sélection 19 comporte trois arrêtoirs 33.5, 33.6 et 33.7, répartis de façon équiangle à la partie inférieure de cette bague et situés, dans la position GE précitée, en regard des butées extrêmes 17.5, 17.6 et 17.7 des jambes 5, 6 et 7.

Les arrêtoirs 32 et 33 sont des rampes inclinées qui, lorsqu'elles coopèrent avec les butées de jambe 17, s'étendent toutes parallèlement et à la même distance des axes d'articulation 13. Mais l'angle que forme chaque arrêtoir 32 par rapport à l'axe géométrique du fourreau 2 (figure 2) est plus grand que celui de chaque arrêtoir 33 (figure 4) de sorte que, dans le premier cas (position PE), l'inclinaison des jambes est faible par rapport à la verticale et la surface de sustentation du pied relativement réduite alors que, dans le deuxième cas (position GE), l'inclinaison desdites jambes est forte et la surface de sustentation relativement élevée.

D'autre part, les arrêtoirs 32 et 33 conjugués à une même butée de jambe 17 sont décalés de l'angle qui est nécessaire pour déplacer une même butée 29 de la bague entre deux plots 31 du support fixe 1. Ainsi, en faisant tourner la bague 19, l'opérateur sélectionne soit la position PE, soit la position GE. Pour que cette sélection soit progressive et réversible, il peut être avantageux que les rampes inclinées constituant deux arrêtoirs 32 et 33 conjugués à une même butée de jambe 17 soient reliées entre elles par une surface évolutive de raccordement ; dès lors, la rotation de la bague de sélection 19 peut commander le pivotement des jambes.

Il peut également être avantageux que la sélection des positions du pied soit sensitive et stable. A cet effet, un organe de verrouillage temporaire est interposé entre la collerette 3 du support fixe et la bague tournante de sélection 19. Dans l'exemple représenté, il s'agit d'une bille 34 logée dans un trou borgne de la butée 29.6 de la bague (figures 2 et 3) et repoussée par un ressort 35 vers la collerette 3, cette bille coopérant sélectivement avec deux empreintes 36 et 37 creusées dans ladite collerette pour les deux positions PE et GE de ladite butée 29.6.

Il est bien évident que le maintien des jambes 5 à 7 dans l'une ou l'autre de leurs positions PE et GE impose que la bague de sélection 19 soit retenue axialement par la portée supérieure 27. Il est donc nécessaire que le couvercle 20 soit parfaitement positionné et fixé relativement au fourreau 2. Ce couvercle présente alors en saillie une couronne annulaire 38 centrée sur la portée cylindrique 18 et solidaire de trois bossages proéminents 39 appliqués sur les plots 31.5 à 31.7, ces bossages étant positionnés dans des encoches 40 de l'extrémité supérieure du fourreau et fixés au moyen de vis 41 dont la tête s'appuie sur le couvercle et dont la tige filetée est bloquée dans un trou taraudé 42 des plots (figures 2 et 3).

Rien ne s'oppose en outre à ce que la bague 19 sélectionne plus de deux positions des butées 29 et par conséquent plus de deux inclinaisons des jambes 5 à 7. Dans ce cas, l'organe de verrouillage 34, 35 peut coopérer également avec une ou des empreintes intermédiaires déterminant la ou les positions intermédiaires ; il est d'autre part possible de prévoir sur la collerette 3 et/ou le fond 21 de la bague, des plots et/ou des butées supplémentaires escamotables.

Par ailleurs, d'autres réalisations sont possibles. En particulier, les plots 29 de la bague de sélection 19 peuvent coopérer avec la portée cylindrique 18 du support 1 pour assurer le guidage en rotation de cette bague ; mais le même résultat peut également être obtenu en mettant en contact les butées 31 du support fixe avec l'alésage 28 de la bague tournante.

Bien entendu, le pied tel qu'il est décrit dans ce qui précède peut être utilisé avec de nombreux accessoires. Par exemple, l'appareil à supporter peut être monté sur le couvercle 20 directement ou par l'intermédiaire d'une plateforme d'orientation bidirectionnelle. Cependant, il semble plus avantageux d'avoir recours à un moyen élévateur subsidiaire qui, dans l'exemple représenté, est constitué par une colonne 43 montée coulissante et éventuellement tournante dans des coussinets 44 du fourreau 2, cette colonne étant susceptible d'être immobilisée à n'importe quel niveau par un organe de blocage 45. Cette colonne lisse peut être remplacée par une colonne à crémaillère coopérant avec un pignon commandé par une manivelle montée tournante dans le couvercle fixe 20.

Le pied, objet de l'invention, peut être utilisé pour supporter des appareils de prise de vues photographiques, cinématographiques ou vidéo, des appareils de projection, des instruments de mesure géodésique, des antennes d'émission ou de réception d'ondes radioélectriques ou autres.

**Revendications**

1. Trépied à surface de sustentation réglable pour le support d'objets divers, notamment d'appareils photographiques ou cinématographiques comprenant, d'une part, un support central (1) muni d'axes d'articulation (13) pour des jambes télescopiques (5 à 7) susceptibles de pivoter dans des plans radiaux et d'autre part, une bague de sélection (19) montée tournante autour de l'axe sensiblement vertical du support, immobilisée en translation axiale et limitée en amplitude de rotation pour pouvoir occuper au moins deux positions angulaires PE, GE, cette bague portant au moins deux jeux de trois arrêtoirs (32.5 à 32.7, 33.5 à 33.7) coopérant avec des butées extrêmes (17.5 à 17.7) des jambes de ces jeux étant décalés angulairement en correspondance avec les positions de la bague, afin de définir respectivement au moins deux inclinaisons différentes de ces jambes de telle façon qu'en tournant ladite bague, un seul jeu d'arrêtoirs se trouve sélectionné pour déterminer l'une des inclinaisons desdites jambes, caractérisé en ce que chacune des jambes (5 à 7) s'étend au-delà de son axe d'articulation (13) vers le haut, afin de constituer, par son extrémité (17.5, 17.6 ou 17.7) qui est perpendiculaire à l'axe de la jambe considérée, la butée correspondante, et en ce que la surface inférieure de la bague de sélection présente, en relation avec cette butée pour former les arrêtoirs conjugués, au moins deux rampes inclinées (32.5 à 32.7 et 33.5 à 33.7) s'étendant parallèlement et à la même distance de l'axe d'articulation de la jambe considérée, mais convergeant vers l'axe géométrique du support suivant des angles différents, ces rampes étant décalées angulairement suivant la périphérie circonférentielle de la bague en correspondance avec les deux positions de cette bague.

2. Trépied selon la revendication 2, caractérisé en ce que les deux rampes inclinées (32.5 à 32.7 et 33.5 à 33.7) conjuguées à une même butée de jambe (17.5, 17.6 ou 17.7) sont reliées entre elles par une surface évolutive de raccordement permettant de commander le pivotement des jambes.

3. Trépied selon la revendication 1, caractérisé en ce que la bague de sélection (19) présente en saillie trois butées proéminentes (29.5 à 29.7), réparties de façon équiangle et interposées entre deux sièges annulaires (23, 27) du support (1) qui assurent l'immobilisation en translation axiale de cette bague, ces sièges étant réunis par une portée cylindrique (18) coopérant avec les butées pour le guidage en rotation de ladite bague et cette portée étant solidaire de trois plots (31.5 à 31.7) coopérant sélectivement avec les faces de ces butées pour la détermination des positions angulaires précitées de la bague.

4. Trépied selon la revendication 1, caractérisé en ce que la bague de sélection (19) présente en saillie dans un alésage cylindrique (28) trois butées proéminentes (29.5 à 29.7) réparties de façon équiangle et interposées entre deux sièges annulaires (23, 27) du support (1) qui assurent l'immobilisation en translation axiale de cette bague, ces sièges étant réunis par des plots (31.5 à 31.7) coopérant, d'une part, avec l'alésage (28) pour le guidage en rotation de ladite bague et, d'autre part, sélectivement avec les faces des butées pour la détermination des positions angulaires précitées de la bague.

5. Trépied selon la revendication 1, caractérisé en ce que la bague (19) comporte, d'une part, un moyeu (21) reposant sur un siège central inférieur (23) du support (1) et centré autour de celui-ci, d'autre part, un rebord tubulaire (25) appliqué contre un siège périphérique supérieur (27) du support (1) et centré sur une jupe cylindrique (26) de celui-ci, ladite bague étant alors libre de tourner mais immobilisée en translation axiale, et en ce que cette bague présente un alésage cylindrique (28) concentrique à une portée centrale cylindrique (18) du support (1) dans laquelle sont formées en saillie trois butées équiangles (29.5 à 29.7) s'étendant jusqu'à cette portée mais sans y toucher et délimitant trois évidements sectoriels (30.5 à 30.7) dans lesquels trois plots proéminents (31.5 à 31.7) de ladite portée s'étendent mais sans toucher à l'alésage et coopèrent avec les butées pour déterminer les positions angulaires précitées de la bague.

6. Trépied selon l'une quelconque des revendications 3 à 5, caractérisé en ce que le support (1) comprend un fourreau tubulaire (2) solidaire d'une collerette (3) dont la partie inférieure présente en saillie trois oreilles (4) pour l'articulation des jambes (5 à 7) et dont la partie supérieure forme, en coopération avec l'extrémité saillante du fourreau, le siège inférieur (23), la portée cylindrique (18) et les trois plots (31.5 à 31.7) précités, cependant que le siège supérieur (27) est constitué par un couvercle (20) centré sur ladite extrémité saillante du fourreau et pourvu de bossages proéminents (39) appliqués et vissés (41) sur lesdits plots.

**Claims**

1. A tripod with adjustable support surface for supporting various objects, particularly photographic or cinematographic apparatus, comprising on the one hand a central support (1) provided with pivot pins (13) for telescopic legs (5 to 7) adapted to pivot in radial planes and, on the other hand, a selection ring (19) mounted to rotate about the substantial vertical axis of the support, immobilized in translation and limited in amplitude of rotation in order to be able to occupy at least two angular positions PE, GE, this ring bearing at least two sets of three stop members (32.5 to 32.7, 33.5 to 33.7) cooperating with end stops (17.5 to 17.7) of the legs and these sets being offset angularly in register with the positions of the ring, in order respectively to define at least two different inclinations of these legs so that by rotating said ring, one set of stop members is selected to determine one of the inclinations of said legs, characterized in that each leg (5 to 7) extends beyond its pivot axis (13), upwardly, in order to constitute, by its end (17.5, 17.6 or 17.7) which is perpendicular to the axis of the leg in question, the corresponding stop, and in that the lower surface of the selection ring presents, in relation with this stop for forming the combined stop members, at least two inclined ramps (32.5 to 32.7 and 33.5 to 33.7) extending parallel and at the same distance from the pivot axis of the leg in question, but converging towards the geometrical axis of the support along different angles, these ramps being offset angularly along the circumferential periphery of the ring in register with the two positions of this ring.

2. Tripod according to claim 2, characterized in that the two inclined ramps (32.5 to 32.7 and 33.5 to 33.7) combined with the same leg stop (17.5, 17.6 or 17.7) are connected together by an evolutive connecting surface enabling the pivoting of the legs to be controlled.

3. Tripod according to claim 1, characterized in that the selection ring (19) has projecting therefrom three protuberant stops (29.5 to 29.7), distributed equiangularly and interposed between two annular seats (23, 27) of the support (1) which ensure the immobilization in axial translation of this ring, these seats being connected by a cylindrical bearing surface (18) cooperating with the stops for guiding said ring in rotation and this bearing surface being fast with three studs (31.5 to 31.7) cooperating selectively with the faces of these stops for determining the above-mentioned positions of the ring.

4. Tripod according to claim 1, characterized in that the selection ring (19) has projecting therefrom in a cylindrical bore (28) three protuberant stops (29.5 to 29.7) distributed equiangularly and interposed between two annular seats (23, 27) of the support (1) which ensure the immobilization in axial translation of this ring, these seats being connected by studs (31.5 to 31.7) cooperating on the one hand with the bore (28) for the guiding in rotation of said ring, and on the other hand, selectively with the faces of the stops for determining the above-mentioned positions of the ring.

5. Tripod according to claim 1, characterized in that the ring (19) comprises on the one hand, a hub (31) resting on a lower central seat of the support (1) and centred there about, on the other hand, a tubular edge (25) applied against an upper peripheral seat (27) of the support (1) and centred on a cylindrical skirt (26) thereof, said ring then being free to rotate but immobilized in axial translation, and in thet said ring presents a cylindrical bore (28) concentric with respect to a central cylindrical bearing surface (18) of the support (1) in which are formed, in projection, three equiangular stops (29.5 to 29.7) extending up to said bearing surface but without touching it and defining three sectorial recesses (30.5 to 30.7) in which three protuberant studs (31.5 to 31.7) of the said bearing surface extend but without touching the bore and cooperate with the stops for determining the above-mentioned angular positions of the ring.

6. Tripod according to any one of claims 3 to 5, characterized in that the support (1) comprises a tubular sleeve (2) fast with a flange (3) of which the lower part has projecting therefrom three lugs (4) for the pivoting of the legs (5 to 7) and of which the upper part forms, in cooperation with the projecting end of the sleeve, the lower seat (23), the cylindrical bearing surface (18) and the three studs (31.5 to 31.7) mentioned above, while the upper seat (27) is constituted by a cover (20) centred on the said projecting end of the sleeve and provided with projecting bosses (39) applied and screwed (41) on said studs.

**Ansprüche**

1. Dreibeinstativ mit regulierbarer Tragfläche zur Halterung diverser Gegenstände, insbesondere für Fotoapparate oder Filmkameras, mit einerseits einem zentralen Ständer (1), der mit Gelenkachsen (13) für in radialen Ebenen schwenkbare Teleskopbeine (5 bis 7) versehen ist, und anderseits einem um die im wesentlichen vertikale Achse des Ständers drehbar gelagerten Selektionsring (19), welcher in seiner Axialbewegung verriegelt und zwecks Einnahme von zumindest zwei Winkelpositionen PE, GE in seiner Rotationsweite begrenztist, wobei dieser Ring zumindest zwei Gruppen von je drei Arretierungen (32.5 bis 32.7, 33.5 bis 33.7) trägt, die mit Endanschlägen (17.5 bis 17.7) der Beine zusammenwirken, wobei diese Gruppen entsprechend den Positionen des Ringes zwecks Festlegung von zumindest zwei verschiedenen Neigungen dieser Beine derart winkelförmig abgesetzt sind, daß sich bei Drehen des Ringes eine einzige Gruppe von Arretierungen zwecks Festlegung einer der Beinneigungen in Auswahlposition befindet, dadurch gekennzeichnet, daß sich jedes der Beine (5 bis 7) zwecks Bildung des entsprechenden Anschlags durch sein zur Achse des betreffenden Beines senkrecht stehendes Ende (17.5, 17.6 oder 17.7) über seine Anlenkachse (13) nach oben erstreckt, und daß die untere Fläche des Selektionsringes in Relation zu diesem Anschlag zwecks Bildung der zugeordneten Arretierungen zumindest zwei geneigte Rampen (32.5 bis 32.7 und 33.5 bis 33.7) aufweist, die sich parallel und in gleichem Abstand von der Gelenkachse des betreffenden Beines erstrecken, jedoch zur geometrischen Achse des Ständers in unterschiedlichen Winkeln zusammenlaufen und entlang dem Umfang des Ringes entsprechend ben beiden Positionen dieses Ringes winkelförmig abgesetzt sind.

2. Dreibeinstativ nach Anspruch 1, dadurch gekennzeichnet, daß die beiden ein- und demselben Beinanschlag (17.5, 17.6 oder 17.7) zugeordneten, geneigten Rampen (32.5 bis 32.7 und 33.5 bis 33.7) durch eine sich erweiternde und die Steuerung des Beinschwenkens zulassende Verbindungsfläche verbunden sind.

3. Dreibeinstativ nach Anspruch 1, dadurch gekennzeichnet, daß der Selektionsring (19) drei vorspringende, ausladende Anschläge (29.5 bis 29.7) aufweist, die gleichwinkelig verteilt zwischen zwei ringförmigen Sitzen (23, 27) des Ständers (1) angeordnet sind und die axiale Verriegelung des Ringes gewährleisten, wobei die Sitze durch eine zylindrische, zwecks Rotationsführung des Ringes mit den Anschlägen zusammenwirkende Fläche (18) verbunden sind, welche Fläche mit drei zur Festlegung der obengenannten Winkelpositionen des Ringes selektiv mit den Flächen der Anschläge zusammenwirkenden Ansätzen (31.5 bis 31.7) versehen ist.

4. Dreibeinstativ nach Anspruch 1, dadurch gekennzeichnet, daß der Selektionsring (19) in einer zylindrischen Bohrung (28) drei vorspringende, ausladende Anschläge (29.5 bis 29.7) aufweist, die gleichwinkelig verteilt zwischen zwei ringförmigen Sitzen (23, 27) des Ständers (1) angeordnet sind und die axiale Verriegelung des Ringes gewährleisten, wobei die Sitze durch Ansätze (31.5 bis 31.7) verbunden sind, die einerseits, zwecks Rotationsführung des Ringes, mit der Bohrung (28) und anderseits, zwecks Festlegung der obengenannten Winkelpositionen des Ringes, selektiv mit den Flächen der Anschläge zusammenwirken.

5. Dreibeinstativ nach Anspruch 1, dadurch gekennzeichnet, daß der Ring (19) einerseits eine auf einem unteren zentralen Sitz (23) des Ständers (1) ruhende und zentrisch um diesen angeordnete Nabe (21), anderseits eine gegen einen oberen peripheren Sitz (27) des Ständers (1) drükkende und über einem Zylindermantel (26) desselben zentrisch angeordnete rohrförmige Randleiste (25) aufweist, wobei der Ring frei drehbar, aber in axialer Richtung verriegelt ist, und daß der Ring eine zu einer zentralen Zylinderfläche (18) des Ständers (1) konzentrische zylindrische Bohrung (28) aufweist, in der drei vorspringende, gleichwinkelige Anschläge (29.5 bis 29.7) gebildet sind, welche sich bis zu dieser Fläche, aber ohne Berührung derselben, erstrecken und drei sektorartige Ausnehmungen (30.5 bis 30.7) begrenzen, in welche sich drei ausladende Ansätze (31.5 bis 31.7) dieser Fläche erstrecken, ohne die Bohrung zu berühren, und zwecks Festlegung der obengenannten Winkelpositionen des Ringes mit den Anschlägen zusammenwirken.

6. Dreibeinstativ nach einem der Ansprüche 3 bis 5, dadurch gekennzeichnet, daß der Ständer (1) eine mit einem Bund (3) versehene rohrförmige Hülse (2) aufweist, wobei der untere Teil des Bundes drei vorspringende Ösen (4) zur Anlenkung der Beine (5 bis 7) aufweist und der obere Teil, zusammen mit dem vorspringenden Ende der Hülse, den unteren Sitz (23), die Zylinderfläche (18) und die drei Ansätze (31.5 bis 31.7) bildet, wogegen der obere Sitz (27) durch einen auf dem vorspringenden Ende der Hülse zentrisch angeordneten und mit auf den Ansätzen aufgesetzten und angeschraubten (41) Fortsätzen (39) versehenen Deckel (20) gebildet ist.

Fig. 1

PE

GE

Fig. 2

Fig. 3

Fig. 4

20 21 26 1 27

31.5
33.5
17.5
32.5

18
22
23
3
24

25
19
33.6
32.6
17.6

V V

11
12
13
8 4
9

13
4

10

5 2 6

0 010 503

0 010 503

Fig. 5

31.7

34,37

29,6

29.7

36

31.5

31.6

29.5

IV

IV

4